# EUROPÄISCHE PATENTSCHRIFT

(11) **EP 2 808 549 B1**
(45) Veröffentlichungstag und Bekanntmachung des Hinweises auf die Patenterteilung: **24.06.2020**
(21) Anmeldenummer: 14167613.0
(22) Anmeldetag: 09.05.2014
(51) Int. Cl.: F04D 19/04, F04D 29/063, F04D 29/059, F16C 33/66, F16N 7/12, F16C 19/06

(54) **Vakuumpumpe**
Vacuum pump
Pompe à vide

(30) Priorität: 29.05.2013 DE 102013210109
(43) Veröffentlichungstag der Anmeldung: 03.12.2014
(73) Patentinhaber: PFEIFFER VACUUM GMBH, 35614 Asslar (DE)
(72) Erfinder: Mekota, Mirko, 35630 Ehringshausen (DE); Vorwerk, Peter, 35630 Ehringshausen (DE); Hofmann, Bernd, 35578 Wetzlar (DE); Schnarr, Johannes, 35625 Rechtenbach (DE)
(74) Vertreter: Manitz Finsterwald Patent- und Rechtsanwaltspartnerschaft mbB

(56) Entgegenhaltungen:
- EP-A2- 2 320 090
- EP-A2- 2 390 510
- EP-A2- 2 557 315
- EP-A2- 2 728 195
- WO-A2-2009/004378
- DE-A1- 2 555 902

## Beschreibung

Die vorliegende Erfindung betrifft eine Vakuumpumpe, insbesondere eine Turbomolekularpumpe, mit einem Rotor und mit einem Drehlager zur drehbaren Unterstützung des Rotors gemäß dem Oberbegriff des Anspruchs 1 und des Anspruchs 2.

Derartige Vakuumpumpen umfassen typischerweise eine Vorrichtung zur Versorgung des Drehlagers mit einem Betriebsmittel, welche einen konischen Abschnitt des Rotors umfasst, an den das Betriebsmittel übertragen wird. Über den konischen Abschnitt wird das Betriebsmittel durch die bei dem Betrieb der Vakuumpumpe wirkenden zentrifugalen und kapillaren Kräfte zu dem Drehlager gefördert.

Es sind Vakuumpumpen bekannt, die einen Betriebsmittelspeicher für das Betriebsmittel mit einem mit dem Betriebsmittel getränkten saugfähigen Speichermittel umfassen, welches einen oder mehrere mit dem Förderabschnitt in Kontakt stehende Abstreifer aufweist, über die das Betriebsmittel an den Förderabschnitt übertragen wird. Ferner sind Vakuumpumpen bekannt, bei denen ein in einem Speicherbehältnis bereitgestelltes Betriebsmittel über einen Docht an den Förderabschnitt übertragen wird. Diesbezüglich wird auf den Stand der Technik gemäß EP 2 320 090 A2, EP 2 557 315 A2, WO 2009/004378 A2 und EP 2 390 510 A2 verwiesen. Außerdem sind Vakuumpumpen bekannt, welche eine Förderpumpe für das Betriebsmittel umfassen, wobei das von der Förderpumpe bereitgestellte Betriebsmittel auf den Förderabschnitt aufgeträufelt wird.

Mit den beschriebenen Vorrichtungen lässt sich keine kontinuierliche Versorgung des Drehlagers mit einer genau vorgegebenen Menge des Betriebsmittels erreichen. Insbesondere führen die Vorrichtung mit einem Betriebsmittelspeicher und die Vorrichtung mit einem aus einem Speicherbehältnis gespeisten Docht jeweils zu einer zu geringen geförderten Betriebsmittelmenge, während die Ausführung mit einer Ölpumpe eine zu hohe geförderte Betriebsmittelmenge bereitstellt.

Es ist daher eine Aufgabe der Erfindung, eine Vakuumpumpe anzugeben, welche eine kontinuierliche Versorgung eines Drehlagers der Vakuumpumpe mit einer gewünschten Menge eines Betriebsmittels gewährleistet.

Diese Aufgabe wird jeweils durch eine Vakuumpumpe mit den Merkmalen des Anspruchs 1 und durch eine Vakuumpumpe mit den Merkmalen des Anspruchs 2 gelöst.

Die Vakuumpumpe, insbesondere Turbomolekularpumpe, umfasst einen Rotor und ein Drehlager, welches mit einem Betriebsmittel zu versorgen ist, zur drehbaren Unterstützung des Rotors, wobei der Rotor einen, insbesondere konischen, Förderabschnitt zur Förderung des Betriebsmittels zu dem Drehlager aufweist. Ferner ist eine Förderpumpe zur Förderung des Betriebsmittels vorgesehen. Zusätzlich ist wenigstens ein Docht vorgesehen, welcher mit dem Förderabschnitt in Kontakt steht, um das von der Förderpumpe zur Verfügung gestellte Betriebsmittel auf den Förderabschnitt zu übertragen.

Im Rahmen der Erfindung wurde erkannt, dass durch die Verwendung eines Dochts zum Übertragen des Betriebsmittels auf den Förderabschnitt des Rotors eine kontinuierliche Versorgung des Drehlagers mit einer genau vorgebbaren Menge eines von einer Förderpumpe bzw. einem Betriebsmittelspeicher bereitgestellten Betriebsmittels erreicht wird. Der Docht bewirkt eine Regulierung der Betriebsmittelmenge, die an den Förderabschnitt übertragen wird und folglich zu dem Drehlager gelangt.

Gemäß einem Aspekt der Erfindung (Anspruch 1) ist ein Auslass für das Betriebsmittel vorgesehen, welcher von der Förderpumpe mit dem Betriebsmittel versorgbar ist, wobei der Docht so angeordnet ist, dass der Docht den Auslass verschließt. Dadurch wird sichergestellt, dass das an dem Auslass bereitgestellte Betriebsmittel im Wesentlichen nur über den Docht weitergefördert wird, so dass eine wirksame Regulierung der übertragenen Betriebsmittelmenge erreicht wird und die Übertragung einer zu großen Betriebsmittelmenge im Wesentlichen unabhängig von der von der Förderpumpe geförderten Betriebsmittelmenge zuverlässig vermieden wird.

Ein anderer Aspekt der Erfindung (Anspruch 2) sieht vor, dass ein Auslass für das Betriebsmittel vorgesehen ist, welcher von der Förderpumpe mit dem Betriebsmittel versorgbar ist, wobei sich der Docht der Länge nach durch den Auslass hindurch erstreckt. Dadurch kann eine gute Übertragung des an dem Auslass bereitgestellten Betriebsmittels an den Docht erreicht werden. Der Docht kann den Auslass derart verschließen, dass im Wesentlichen die gesamte über den Auslass austretende Betriebsmittelmenge durch den Docht gefördert wird und folglich eine besonders wirksame Regulierung der geförderten Betriebsmittelmenge erfolgt. Der Docht kann in dem Auslass eingeklemmt und dadurch in seiner Lage fixiert sein, insbesondere derart, dass er in Kontakt mit dem Förderabschnitt gehalten wird.

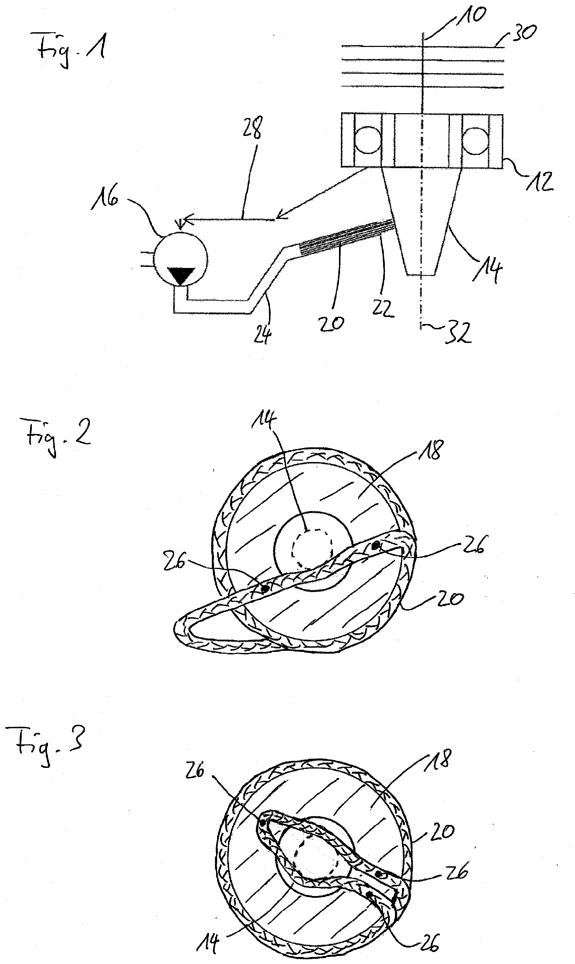

Vorteilhafte Ausführungsformen der Erfindung sind in den Unteransprüchen, der Beschreibung und in Fig. 1 beschrieben.

Der Auslass ist bevorzugt durch ein offenes Ende eines Förderkanals für das Betriebsmittel gebildet. Der Docht kann sich durch den Auslass hindurch in den Kanal hinein erstrecken, so dass der Docht über einen Teil seiner Länge in dem Kanal angeordnet ist. Der Docht kann zumindest über einen Teil seiner in dem Kanal angeordneten Länge im Wesentlichen den vollständigen Kanalquerschnitt ausfüllen. Dadurch wird eine besonders wirksame Übergabe des bereitgestellten Betriebsmittels an den Docht erreicht, wobei zuverlässig sichergestellt wird, dass das Betriebsmittel lediglich über den Docht durch den Auslass gefördert wird. Gleichzeitig wird eine wirksame Fixierung des Dochts in dem Kanal erreicht.

Gemäß einer vorteilhaften Ausführungsform weist die Förderpumpe Mittel zur Einstellung der Förderleistung der Förderpumpe auf. Der Wert der kontinuierlich an das Drehlager gelieferten Betriebsmittelmenge kann folglich flexibel eingestellt werden. Die Mittel zur Einstellung der Förderleistung können ein Mittel zur Eingabe eines Sollwerts für die Förderleistung durch einen Benutzer umfassen. Die Mittel zur Einstellung der Förderleistung können elektronische Mittel umfassen, um einen, insbesondere von einem Benutzer eingestellten, Sollwert für die Förderleistung zu erfassen.

Eine bevorzugte Weiterbildung sieht vor, dass der Docht zumindest bereichsweise mit einem Speichermittel eines zusätzlich zu der Förderpumpe vorgesehenen Betriebsmittelspeichers in Kontakt steht. Dadurch wird eine unmittelbare Übertragung des in dem Betriebsmittelspeicher bereitgestellten Betriebsmittels an den Docht erreicht. Der Docht verbessert die Übertragung des Betriebsmittels von dem Betriebsmittelspeicher zu dem Förderabschnitt im Vergleich zu einer unmittelbaren Kontaktierung des Förderabschnitts durch den Betriebsmittelspeicher und stellt eine kontinuierliche Übertragung der gewünschten Betriebsmittelmenge an den Förderabschnitt sicher.

Eine vorteilhafte Ausführungsform sieht vor, dass der Docht um den Betriebsmittelspeicher herumgewickelt ist. Der Docht kann zumindest einfach oder mehrfach um den Betriebsmittelspeicher herumgewickelt sein. Dabei kann zumindest ein Teil des um den Betriebsmittelspeicher herumgewickelten Abschnitts des Dochts in unmittelbarem Kontakt mit dem Speichermittel stehen. Dadurch wird ein großflächiger und inniger Kontakt des Dochts mit dem Speichermittel bei gleichzeitig einfacher Herstellbarkeit der Anordnung erreicht.

Gemäß einer weiteren vorteilhaften Ausführungsform ist der Docht an dem Betriebsspeicher befestigt, vorzugsweise durch ein sich zumindest teilweise durch den Docht und das Speichermittel hindurch erstreckendes Befestigungsmittel. Dadurch kann der Docht so fixiert werden, dass er in Kontakt mit dem Förderabschnitt des Rotors gehalten wird. Das Befestigungsmittel kann z.B. nadelartig ausgebildet und in den Docht und das Speichermittel hineingestochen sein.

Der Betriebsmittelspeicher kann eine Öffnung aufweisen, in die die Rotorwelle mit ihrem Förderabschnitt hineinragen kann. Ein Abschnitt des Dochts kann die Öffnung zumindest teilweise und insbesondere vollständig überqueren und dabei vorzugsweise mit dem Förderabschnitt in Kontakt stehen. Wenn der Docht beidseits der Öffnung an dem Betriebsmittelspeicher befestigt ist, wird der Docht zuverlässig in seiner den Förderabschnitt kontaktierenden Stellung gehalten. Der Betriebsmittelspeicher kann beispielsweise ringförmig um den Förderabschnitt herum verlaufen und eine zumindest näherungsweise kreisringförmige Grundform aufweisen.

Der Docht kann sich zumindest einfach und insbesondere mehrfach vollständig über die Öffnung hinweg erstrecken. Beispielsweise kann sich der Docht zumindest zweimal vollständig über die Öffnung hinweg erstrecken, wobei der Förderabschnitt zwischen den zwei sich über die Öffnung hinweg erstreckenden Abschnitten des Dochts angeordnet sein kann.

Das Speichermittel ist bevorzugt zumindest bereichsweise durch ein für das Betriebsmittel saugfähiges Material gebildet, z.B. durch einen Filz oder ein vergleichbares, insbesondere textiles und/oder poröses saugfähiges Material.

Das Speichermittel kann mehrere Scheiben umfassen, die vorzugsweise aufeinander gestapelt sind. Beispielsweise können die Scheiben jeweils eine kreisringförmige Grundform aufweisen und so aufeinander gestapelt sein, dass sich ihre Grundflächen im Wesentlichen überlappen. Ein solcher Betriebsmittelspeicher lässt sich einfach herstellen, wobei sich mit geringem Aufwand eine gewünschte Speicherkapazität und eine gewünschten Form des Betriebsmittelspeichers, beispielsweise eine im Wesentlichen kreisringförmige Grundform, erreichen lassen.

Der Docht kann über seine Längsseite mit dem Förderabschnitt in Kontakt stehen. Alternativ oder zusätzlich kann der Docht ein offenes Ende aufweisen und über das offene Ende mit dem Förderabschnitt in Kontakt stehen. In beiden Fällen wird eine dosierte Übertragung des Betriebsmittels an den Förderabschnitt gewährleistet.

Der Förderabschnitt weist vorzugsweise einen zu dem Drehlager hin größer werdenden Außendurchmesser auf. Das auf den Förderabschnitt übertragene Betriebsmittel lässt sich bei dieser Ausgestaltung ohne zusätzlichen Aufwand durch die bei dem Betrieb der Vakuumpumpe wirkende Zentrifugalkraft und die kapillare Wirkung zu dem Drehlager fördern.

Bevorzugt ist die Vakuumpumpe so ausgebildet, dass das Betriebsmittel während des Betriebs der Vakuumpumpe in einem Kreislauf förderbar ist. Das Betriebsmittel wird dabei beispielsweise von der Förderpumpe und/oder von dem Betriebsmittelspeicher an den Docht übertragen, von dem Docht an den Förderabschnitt übertragen, über den Förderabschnitt zu dem Drehlager gefördert, wo es seine für den Betrieb des Drehlagers erforderliche Funktion erfüllt, und wird schließlich von dem Drehlager über den Kreislauf zurück zu der Förderpumpe und/oder zu dem Betriebsmittelspeicher gefördert. Für die Rückführung des Betriebsmittels von dem Drehlager zu der Förderpumpe und/oder zu dem Betriebsmittelspeicher kann ein zwischen dem Drehlager und der Förderpumpe angeordnetes Fördermittel oder ein zwischen dem Drehlager und dem Betriebsmittelspeicher angeordnetes Fördermittel vorgesehen sein. Das Fördermittel kann ein kapillares Fördermittel wie z.B. ein Docht oder ein Abschnitt eines Dochts sein.

Die geförderte Betriebsmittelmenge kann durch entsprechende Wahl des Materials des Dochts und/oder des Querschnitts des Dochts auf einen gewünschten Wert eingestellt werden. Um den bei dem Betrieb der Vakuumpumpe herrschenden thermischen Bedingungen standhalten zu können, ist der Docht vorzugsweise aus einem temperaturbeständigen Material ausgebildet.

Das Drehlager ist vorzugsweise als Wälzlager, insbesondere Kugellager, ausgebildet. Bei dem Betriebsmittel kann es sich um ein Schmiermittel für das Drehlager bzw. Wälzlager handeln, welches insbesondere ein Öl umfassen kann.

Nachfolgend wird die Erfindung beispielhaft anhand einer vorteilhaften Ausführungsform unter Bezugnahme auf die beigefügten Figuren beschrieben. Es zeigen:
- Fig. 1: eine Vakuumpumpe gemäß einer Ausführungsform der Erfindung in einer schematischen Darstellung, und
- Fig. 2 bis 5: jeweils einen Betriebsmittelspeicher mit einem Docht für eine Vakuumpumpe gemäß einem nicht zu der Erfindung gehörenden Beispiel in Draufsicht.

Die in Fig. 1 schematisch dargestellte Vakuumpumpe umfasst einen Rotor 10, der durch ein Wälzlager 12 um eine Drehachse 32 drehbar unterstützt ist. Der Rotor 10 umfasst eine in Fig. 1 nur schematisch dargestellte Rotorwelle und mehrere an der Rotorwelle angeordnete, in Fig. 1 ebenfalls nur schematisch angedeutete turbomolekulare Rotorscheiben 30. Die radial zu der Rotorwelle verlaufenden Rotorscheiben 30 liegen jeweils einer von mehreren zwischen den Rotorscheiben 30 angeordneten Statorscheiben gegenüber, die in Fig. 1 nicht dargestellt sind, und bilden mit den Statorscheiben eine turbomolekulare Pumpstufe der Turbomolekularpumpe.

An dem von den Rotorscheiben 30 abgewandten Ende der Rotorwelle ist ein mit der Rotorwelle drehfest verbundener konischer Förderabschnitt 14 vorgesehen, der koaxial zu der Drehachse 32 ist und einen zu dem Drehlager 12 hin zunehmenden Außendurchmesser aufweist.

Zur Versorgung des Drehlagers 12 mit einem Betriebsmittel ist eine Förderpumpe 16 vorgesehen, die das an ihrem Einlass zur Verfügung stehende Betriebsmittel in einen Förderkanal 24 fördert, welcher sich in Richtung des Förderabschnitts 14 erstreckt. Das dem Förderabschnitt 14 zugewandte Ende des Kanals 24 bildet einen Auslass 22 für das Betriebsmittel. Dieser Auslass 22 ist durch einen Docht 20 verschlossen, welcher sich durch den Auslass 22 hindurch in den Förderkanal 24 erstreckt und über einen wesentlichen Teil seiner Länge hinweg innerhalb des Förderkanals 24 angeordnet ist.

Ein außerhalb des Förderkanals 24 angeordneter Abschnitt des Dochts 20 verläuft von dem Auslass 22 zu dem Förderabschnitt 14 und kontaktiert den Förderabschnitt 14 derart, dass das in dem Docht 20 geförderte Betriebsmittel durch kapillare Wirkung an den Förderabschnitt 14 übertragen wird.

Im Betrieb der Vakuumpumpe wird durch die Förderpumpe 16 ein Betriebsmittel in den Förderkanal 24 eingebracht und in Richtung des Auslasses 22 gefördert, wo es an den Docht 20 übertragen wird. Von dort wird das Betriebsmittel infolge der gleitenden Berührung zwischen dem Docht 20 und dem Förderabschnitt 14 auf den Förderabschnitt 14 übertragen.

Durch die bei der Rotation des Förderabschnitts 14 wirkende Zentrifugalkraft und die kapillare Wirkung wird das Betriebsmittel in Richtung des zunehmenden Außendurchmessers des Förderabschnitts 14 und folglich zu dem Drehlager 12 hin gefördert, in dem es seine für den Betrieb des Drehlagers 12 notwendige, insbesondere schmierende, Funktion erfüllt. Wie in Fig. 1 durch Pfeile dargestellt, umfasst die Vakuumpumpe eine Einrichtung zur Förderung des Betriebsmittels von dem Drehlager 12 zurück zu der Förderpumpe 16, so dass das Betriebsmittel in einem geschlossenen Kreislauf 28 gefördert wird.

Fig. 2 zeigt einen Betriebsmittelspeicher 18 und einen Docht 20 für eine Vakuumpumpe in Draufsicht, d.h. in Drehachsenrichtung der Vakuumpumpe gesehen.

Der Betriebsmittelspeicher 18 weist eine kreisringförmige Grundform auf und ist durch mehrere in Betrachtungsrichtung aufeinander gestapelte und mit einem Betriebsmittel getränkte Scheiben aus einem saugfähigen Material wie z.B. Filz gebildet. Das Innere der kreisringförmigen Scheiben bildet eine Öffnung des Betriebsmittelspeichers 18, in die sich der in Fig. 2 durch gestrichelte Linien angedeutete Förderabschnitt 14 der Vakuumpumpe hinein erstreckt.

Der Betriebsmittelspeicher 18 ist entlang seines äußeren Umfangs mehrfach mit dem Docht 20 umwickelt, wobei sich der äußere Umfang des Betriebsmittelspeichers 18 und der Docht 20 direkt kontaktieren, so dass das in dem Betriebsmittelspeicher 18 bereitgestellte Betriebsmittel an den Docht 20 übertragen wird.

Der Docht 20 umfasst einen sich über die Öffnung des Betriebsmittelspeichers 18 hinweg erstreckenden Abschnitt. Der Docht 20 ist beidseits dieses Abschnitts jeweils über ein nadelartiges Befestigungsmittel 26 an dem Betriebsmittelspeicher 18 fixiert. In dem in die Vakuumpumpe eingebauten Zustand kontaktiert der Docht 20 mit seiner Längsseite tangential den Förderabschnitt 14, so dass das in dem Docht 20 geförderte Betriebsmittel durch kapillare Wirkung an den Förderabschnitt 14 übertragen wird.

Die in Fig. 3 gezeigte Anordnung entspricht im Wesentlichen der in Fig. 2 gezeigten Anordnung. Bei der in Fig. 3 gezeigten Anordnung erstreckt sich der Docht 20 zweimal über die Öffnung des Betriebsmittelspeichers 18 hinweg. In dem in die Vakuumpumpe eingebauten Zustand ist der Förderabschnitt 14 zwischen den beiden sich über die Öffnung des Betriebsmittelspeichers 18 hinweg erstreckenden Abschnitten des Dochts 20 angeordnet, so dass der Förderabschnitt 14 beidseits durch den Docht 20 kontaktiert wird, wodurch die an den Förderabschnitt 14 übertragene Betriebsmittelmenge erhöht wird.

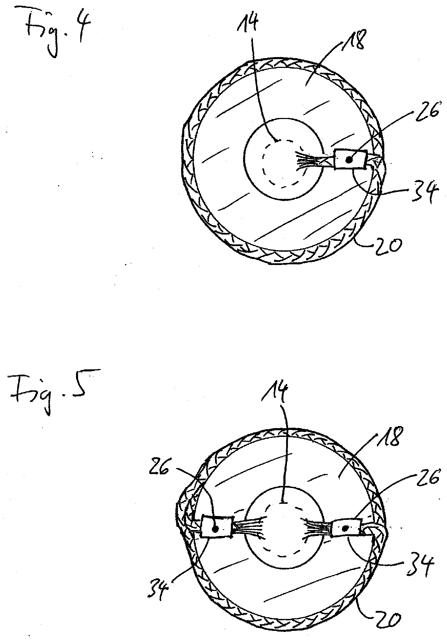

Die in Fig. 4 gezeigte Anordnung entspricht im Wesentlichen den in Fig. 2 und 3 gezeigten Anordnungen, wobei der in Fig. 4 gezeigte Docht 20 ein offenes Ende aufweist und über das offene Ende mit dem Förderabschnitt 14 in Kontakt steht. Ein zu dem offenen Ende benachbarter Bereich des Dochts 20 ist durch eine Manschette 34 hindurch geführt, welche gemeinsam mit dem Docht 20 an dem Betriebsmittelspeicher 18 befestigt ist, wodurch der Docht 20 in seiner den Förderabschnitt 14 kontaktierenden Stellung gehalten ist.

Die in Fig. 5 gezeigte Anordnung entspricht im Wesentlichen der in Fig. 4 gezeigten Anordnung, wobei der in Fig. 5 gezeigte Docht 20 zwei offene Enden aufweist, über die der Docht 20 jeweils mit dem Förderabschnitt 14 in Kontakt steht, so dass die an den Förderabschnitt 14 übertragene Betriebsmittelmenge gegenüber der in Fig. 4 gezeigten Anordnung erhöht ist.

### Bezugszeichenliste

- 10: Rotor
- 12: Drehlager
- 14: Förderabschnitt
- 16: Förderpumpe
- 18: Betriebsmittelspeicher
- 20: Docht
- 22: Auslass
- 24: Förderkanal
- 26: Befestigungsmittel
- 28: Kreislauf
- 30: Rotorscheibe
- 32: Drehachse
- 34: Manschette

## Patentansprüche

1. Vakuumpumpe, insbesondere Turbomolekularpumpe, mit einem Rotor (10) und mit einem Drehlager (12), welches mit einem Betriebsmittel zu versorgen ist, zur drehbaren Unterstützung des Rotors (10), wobei der Rotor (10) einen, insbesondere konischen, Förderabschnitt (14) zur Förderung des Betriebsmittels zu dem Drehlager (12) aufweist,
wobei eine Förderpumpe (16) zur Förderung des Betriebsmittels vorgesehen ist, **dadurch gekennzeichnet, dass** wenigstens ein Docht (20) vorgesehen ist, welcher mit dem Förderabschnitt (14) in Kontakt steht, um das von der Förderpumpe (16) zur Verfügung gestellte Betriebsmittel auf den Förderabschnitt (14) zu übertragen, wobei ein Auslass (22) für das Betriebsmittel vorgesehen ist, welcher von der Förderpumpe (16) mit dem Betriebsmittel versorgbar ist, wobei der Docht (20) so angeordnet ist, dass der Docht (20) den Auslass (22) verschließt.

2. Vakuumpumpe, insbesondere Turbomolekularpumpe, mit einem Rotor (10) und mit einem Drehlager (12), welches mit einem Betriebsmittel zu versorgen ist, zur drehbaren Unterstützung des Rotors (10), wobei der Rotor (10) einen, insbesondere konischen, Förderabschnitt (14) zur Förderung des Betriebsmittels zu dem Drehlager (12) aufweist,
wobei eine Förderpumpe (16) zur Förderung des Betriebsmittels vorgesehen ist, **dadurch gekennzeichnet, dass** wenigstens ein Docht (20) vorgesehen ist, welcher mit dem Förderabschnitt (14) in Kontakt steht, um das von der Förderpumpe (16) zur Verfügung gestellte Betriebsmittel auf den Förderabschnitt (14) zu übertragen, wobei ein Auslass (22) für das Betriebsmittel vorgesehen ist, welcher von der Förderpumpe (16) mit dem Betriebsmittel versorgbar ist, wobei sich der Docht (20) der Länge nach durch den Auslass (22) hindurch erstreckt.

3. Vakuumpumpe nach Anspruch 1 oder 2,
**dadurch gekennzeichnet, dass**
der Auslass (22) durch ein offenes Ende eines Förderkanals (24) für das Betriebsmittel gebildet ist.

4. Vakuumpumpe nach einem der vorstehenden Ansprüche,
**dadurch gekennzeichnet, dass**
die Förderpumpe (16) Mittel zur Einstellung der Förderleistung der Förderpumpe (16) aufweist.

5. Vakuumpumpe nach einem der vorstehenden Ansprüche,
**dadurch gekennzeichnet, dass**
zusätzlich zu der Förderpumpe (16) ein Betriebsmittelspeicher (18) mit einem saugfähigen Speichermittel für das Betriebsmittel vorgesehen ist, wobei der Docht (20) das von dem saugfähigen Speichermittel zur Verfügung gestellte Betriebsmittel auf den Förderabschnitt überträgt.

6. Vakuumpumpe nach Anspruch 5,
**dadurch gekennzeichnet, dass**
der Docht (20) zumindest bereichsweise mit dem Speichermittel des Betriebsmittelspeichers (18) in Kontakt steht.

7. Vakuumpumpe nach Anspruch 5 oder 6,
**dadurch gekennzeichnet, dass**
der Docht (20) um den Betriebsmittelspeicher (18) herumgewickelt ist.

8. Vakuumpumpe nach einem der Ansprüche 5 bis 7,
**dadurch gekennzeichnet, dass**
der Docht (20) an dem Betriebsmittelspeicher (18) befestigt ist, vorzugsweise durch ein sich zumindest teilweise durch den Docht (20) und das Speichermittel hindurch erstreckendes Befestigungsmittel (26).

9. Vakuumpumpe nach einem der Ansprüche 5 bis 8,
**dadurch gekennzeichnet, dass**
das Speichermittel zumindest bereichsweise durch einen Filz gebildet ist.

10. Vakuumpumpe nach einem der Ansprüche 5 bis 9,
**dadurch gekennzeichnet**,
das Speichermittel mehrere Scheiben umfasst, die vorzugsweise aufeinander gestapelt sind.

11. Vakuumpumpe nach einem der vorstehenden Ansprüche,
**dadurch gekennzeichnet,**
**dass** der Docht (20) über seine Längsseite mit dem Förderabschnitt (14) in Kontakt steht und/oder
**dass** der Docht (20) ein offenes Ende aufweist und über das offene Ende mit dem Förderabschnitt (14) in Kontakt steht.

12. Vakuumpumpe nach einem der vorstehenden Ansprüche,
**dadurch gekennzeichnet , dass**
der Förderabschnitt (14) einen zu dem Drehlager (12) hin größer werdenden Außendurchmesser aufweist.

13. Vakuumpumpe nach einem der vorstehenden Ansprüche,
**dadurch gekennzeichnet , dass**
die Vakuumpumpe so ausgebildet ist, dass das Betriebsmittel während des Betriebs der Vakuumpumpe in einem Kreislauf förderbar ist.

## Claims

1. A vacuum pump, in particular a turbomolecular pump, having a rotor (10) and having a rotary bearing (12), which is to be supplied with an operating medium, for the rotatable support of the rotor (10), with the rotor (10) having a conveying section (14), in particular a conical conveying section (14), for conveying the operating medium to the rotary bearing (12),
wherein a conveying pump (16) is provided for conveying the operating medium,
**characterized in that**
at least one wick (20) is provided which is in contact with the conveying section (14) to transfer the operating medium provided by the conveying pump (16) to the conveying section (14),
wherein an outlet (22) is provided for the operating medium and can be supplied with the operating medium by the conveying pump (16), with the wick (20) being arranged such that the wick (20) closes the outlet (22).

2. A vacuum pump, in particular a turbomolecular pump, having a rotor (10) and having a rotary bearing (12), which is to be supplied with an operating medium, for the rotatable support of the rotor (10), with the rotor (10) having a conveying section (14), in particular a conical conveying section (14), for conveying the operating medium to the rotary bearing (12),
wherein a conveying pump (16) is provided for conveying the operating medium,
**characterized in that**
at least one wick (20) is provided which is in contact with the conveying section (14) to transfer the operating medium provided by the conveying pump (16) to the conveying section (14), wherein an outlet (22) is provided for the operating medium and can be supplied with the operating medium by the conveying pump (16), with the wick (20) extending lengthways through the outlet (22).

3. A vacuum pump in accordance with claim 1 or claim 2,
**characterized in that**
the outlet (22) is formed by an open end of a conveying passage (24) for the operating medium.

4. A vacuum pump in accordance with any one of the preceding claims,
**characterized in that**
the conveying pump (16) has means for setting the conveying performance of the conveying pump (16).

5. A vacuum pump in accordance with any one of the preceding claims,
**characterized in that**
an operating medium store (18) having an absorbent storage means for the operating medium is provided in addition to the conveying pump (16), with the wick (20) transferring the operating medium provided by the absorbent storage means to the conveying section (14).

6. A vacuum pump in accordance with claim 5,
**characterized in that**
the wick (20) is at least regionally in contact with the storage means of the operating medium store (18).

7. A vacuum pump in accordance with claim 5 or claim 6,
**characterized in that**
the wick (20) is wound around the operating medium store (18).

8. A vacuum pump in accordance with any one of the claims 5 to 7,
**characterized in that**
the wick (20) is fastened to the operating medium store (18), preferably by a fastening means (26) extending at least partly through the wick (20) and the storage means.

9. A vacuum pump in accordance with any one of the claims 5 to 8,
**characterized in that**
the storage means is at least regionally formed by a felt.

10. A vacuum pump in accordance with any one of the claims 5 to 9,
**characterized in that**
the storage means comprises a plurality of disks which are preferably stacked on one another.

11. A vacuum pump in accordance with any one of the preceding claims,
**characterized in that**
the wick (20) is in contact with the conveying section (14) over its longitudinal side; and/or
**in that** the wick (20) has an open end and is in contact with the conveying section (14) via the open end.

12. A vacuum pump in accordance with any one of the preceding claims,
**characterized in that**
the conveying section (14) has an external diameter becoming larger toward the rotary bearing (12).

13. A vacuum pump in accordance with any one of the preceding claims,
**characterized in that**
the vacuum pump is configured such that the operating medium can be conveyed in a circuit during the operation of the vacuum pump.

## Revendications

1. Pompe à vide, en particulier pompe turbomoléculaire, comportant un rotor (10) et un palier rotatif (12) qui doit être alimenté avec un fluide de fonctionnement et qui est destiné à supporter le rotor (10) en rotation, le rotor (10) ayant une portion de refoulement (14) en particulier conique pour refouler le fluide de fonctionnement vers le palier rotatif (12),
dans laquelle
il est prévu une pompe de refoulement (16) pour refouler le fluide de fonctionnement,
**caractérisée en ce que**
il est prévu au moins une mèche (20) qui est en contact avec la portion de refoulement (14) afin de transférer le fluide de fonctionnement, fourni par la pompe de refoulement (16), vers la portion de refoulement (14), et
il est prévu une sortie (22) pour le fluide de fonctionnement, qui peut être alimentée en fluide de fonctionnement par la pompe de refoulement (16), la mèche (20) étant disposée de telle sorte que la mèche (20) referme la sortie (22).

2. Pompe à vide, en particulier pompe turbomoléculaire, comportant un rotor (10) et un palier rotatif (12) qui doit être alimenté avec un fluide de fonctionnement et qui est destiné à supporter le rotor (10) en rotation, le rotor (10) ayant une portion de refoulement (14) en particulier conique pour refouler le fluide de fonctionnement vers le palier rotatif (12),
dans laquelle
il est prévu une pompe de refoulement (16) pour refouler le fluide de fonctionnement,
**caractérisée en ce que**
il est prévu au moins une mèche (20) qui est en contact avec la portion de refoulement (14) afin de transférer le fluide de fonctionnement, fourni par la pompe de refoulement (16), vers la portion de refoulement (14), et
il est prévu une sortie (22) pour le fluide de fonctionnement, qui peut être alimentée en fluide de fonctionnement par la pompe de refoulement (16), la mèche (20) s'étendant dans le sens de la longueur à travers la sortie (22).

3. Pompe à vide selon la revendication 1 ou 2,
**caractérisée en ce que**
la sortie (22) est formée par une extrémité ouverte d'un canal de refoulement (24) pour le fluide de fonctionnement.

4. Pompe à vide selon l'une des revendications précédentes,
**caractérisée en ce que**
la pompe de refoulement (16) comprend des moyens pour régler le débit de refoulement de la pompe de refoulement (16).

5. Pompe à vide selon l'une des revendications précédentes,
**caractérisée en ce que**
en supplément à la pompe de refoulement (16), il est prévu un réservoir à fluide de fonctionnement (18) muni d'un moyen de stockage absorbant pour le fluide de fonctionnement, la mèche (20) transférant le fluide de fonctionnement, fourni par le moyen de stockage absorbant, vers la portion de refoulement.

6. Pompe à vide selon la revendication 5,
**caractérisée en ce que**
la mèche (20) est au moins localement en contact avec le moyen de stockage du réservoir à fluide de fonctionnement (18).

7. Pompe à vide selon la revendication 5 ou 6,
**caractérisée en ce que**
la mèche (20) est enroulée autour du réservoir à fluide de fonctionnement (18).

8. Pompe à vide selon l'une des revendications 5 à 7,
**caractérisée en ce que**
la mèche (20) est fixée au réservoir à fluide de fonctionnement (18), de préférence par un moyen de fixation (26) qui s'étend au moins partiellement à travers la mèche (20) et à travers le moyen de stockage.

9. Pompe à vide selon l'une des revendications 5 à 8,
**caractérisée en ce que**
le moyen de stockage est formé au moins localement par un feutre.

10. Pompe à vide selon l'une des revendications 5 à 9,
**caractérisée en ce que**
le moyen de stockage comprend plusieurs disques qui sont de préférence empilés les uns sur les autres.

11. Pompe à vide selon l'une des revendications précédentes,
**caractérisée en ce que**
par son côté long, la mèche (20) est en contact avec la portion de refoulement (14), et/ou
la mèche (20) présente une extrémité ouverte, et c'est par son extrémité ouverte qu'elle est en contact avec la portion de refoulement (14).

12. Pompe à vide selon l'une des revendications précédentes,
**caractérisée en ce que**
la portion de refoulement (14) présente un diamètre extérieur qui augmente vers le palier rotatif (12).

13. Pompe à vide selon l'une des revendications précédentes,
**caractérisée en ce que**
la pompe à vide est réalisée de telle sorte que le fluide de fonctionnement peut circuler dans un circuit pendant le fonctionnement de la pompe à vide.
